# EUROPEAN PATENT APPLICATION

(11) **EP 4 811 270 A1**
(43) Date of publication of application: **23.09.2026**
(21) Application number: 25179139.8
(22) Date of filing: 27.05.2025
(51) Int. Cl.: G06T 3/14, G06T 3/02, G06T 3/60, G06T 5/50, G06T 7/12, G06T 7/149, G06T 7/33

(54) **MEDICAL IMAGE ANALYSIS SYSTEM AND METHOD**

(30) Priority: 17.03.2025 TW 114109761
(71) Applicant: Heron Neutron Medical Corp., Zhubei City, Hsinchu County (TW)
(72) Inventor: HUANG, Wei-Lun, Zhubei City, Hsinchu County (TW); YOU, Zhen-Fan, Zhubei City, Hsinchu County (TW); CHEN, Wei-Lin, Zhubei City, Hsinchu County (TW); YEH, Chih-Jen, Zhubei City, Hsinchu County (TW)
(74) Representative: Patentship Patentanwaltsgesellschaft mbH

(57) **Abstract**

The present invention provides a medical image analysis system (100) and method, improving the accuracy of boron quantitative analysis between the boundary of the human body and the air through the fusion of anatomical images and functional images. The system (100) includes a contour module (120), an image fusion module (140), and a distribution analysis module (150). The contour module (120) receives an anatomical image and a functional image. The contour module (120) further includes a contour recognition unit (121) and a contour definition unit (122). The contour recognition unit (121) identifies geometric contours in the anatomical image. The contour definition unit (122) defines distribution contours based on the signal intensity of boron in the functional image. The image fusion module (140) registers the anatomical image and functional image. The image fusion module (140) outputs the result of the intersection area of the geometric and distribution contours.

## Description

### TECHNICAL FIELD OF THE INVENTION

The present invention relates to a medical image analysis system and method, and, in particular, it relates to a system and method for enhancing the accuracy and precision of medical images in qualitative and quantitative analysis by integrating anatomical images and functional images.

### BACKGROUND OF THE INVENTION

Boron Neutron Capture Therapy (BNCT) is an innovative radiation therapy for cancer by boron-containing drugs (such as amino acids serving as carriers for the boron element), these drugs are designed to selectively accumulate in the tumor cells of patients with minimal absorption in normal cells. After the patient is exposed to an epithermal neutron beam, the tumor cells that have accumulated the boron-containing drug are more likely to absorb the neutrons than normal healthy cells, consequently, a nuclear reaction occurs when the neutrons interact with the boron-containing drugs, producing lithium nuclei (⁷Li) and alpha particles. The generated alpha particles and lithium nuclei (⁷Li) atoms have an extremely short range (about 5-9 micrometers) and can destroy tumor cells. This range is roughly equal to the diameter of a cell, allowing the energy to be concentrated within the tumor cells, causing minimal damage to the surrounding healthy tissues. Therefore, BNCT treatment offers advantages such as high selectivity for tumor sites, low toxicity, fewer treatment sessions compared to traditional radiation therapy, less burden on the body, and a faster recovery period.

For traditional radiology or the aforementioned Boron Neutron Capture Therapy (BNCT), the use of medical imaging is crucial, as it aids in accurately locating the tumor sites in patients, protecting healthy tissues during the treatment process, evaluating the treatment efficacy, and contributing to the development of new medical tools in the field of medical engineering. Currently, medical imaging is mainly categorized into anatomical imaging (such as computed tomography (CT) and magnetic resonance imaging (MRI), which provide information about the physical geometric structure) and functional imaging (such as positron emission tomography (PET), gamma scintigraphy, and single-photon emission computed tomography (SPECT), which provide information about the distribution of substances, e.g., targeted drugs or other labeled compound in the body).

For example, U.S. Patent Publication No.US20190030369A1 discloses a treatment planning analysis system based on anatomical images for preliminary analysis prior to boron neutron capture therapy. The system is used to distinguish mucosal regions, skeletal regions, air regions, and corresponding body contours in medical images, thereby assisting medical personnel in identifying affected areas within body tissues. In the '369 application, the components of the system include an image acquisition unit, a body contour setting unit, a void region setting unit, and a mucosal region setting unit. Through the body contour setting unit, the body contour region of the patient is defined based on the images acquired by the image acquisition unit. Subsequently, the void region setting unit defines the void region inside the aforementioned body contour region based on pixel values. Finally, on the foundation of the body contour region and void region, the mucosal region setting unit extends a portion with a first thickness from the inside of the body contour region outward toward the surface of the void region. It identifies the mucosal region containing mucosa and outputs the body contour region, void region, and mucosal region of the patient's body as an anatomical image. This achieves the purpose of locating areas such as body contours, skeletal regions, air regions, void regions, and mucosal regions within the patient's body.

However, although anatomical images in conventional techniques can be used to distinguish physical geometric structures such as body contours and skeletal regions, their resolution for soft tissues remains relatively poor. Furthermore, if the distribution information of the targeted drugs or other labeled substances (e.g., isotopes with boron drugs being the labeled substances in the case of BNCT) is required, it still relies on functional imaging scans. However, functional images have the drawback of poor resolution for the aforementioned physical geometric structures. As a result, medical personnel often need to reference multiple anatomical and functional images simultaneously when analyzing lesions. However, the scans of the anatomical images and functional images cannot be performed simultaneously. In the application of BNCT, medical image modeling requires image fusion technology (Image Registration) to analyze the distribution of boron drugs within the human body, matching information from the aforementioned anatomical and functional images. Nevertheless, such image fusion technology is not flawless; due to instrument settings during imaging and the patient's posture, the alignment of coordinates may easily result in displacement at the edges of the body contour. Furthermore, contour differences tend to be blurred for larger organs. This phenomenon may lead to the underestimation of boron concentration at the boundaries between the body and air in BNCT models, such as in the skin, oral mucosa, and mucosa within sinus cavities. Consequently, this impacts the accuracy and precision of boron drug quantification and results in BNCT treatment outcomes being less effective than anticipated.

### BRIEF SUMMARY OF THE INVENTION

Due to the aforementioned reasons, it is currently imperative to address and improve these deficiencies. Therefore, the primary purpose of the present invention is to provide a novel medical image analysis system and method. By integrating anatomical image and functional image through an image fusion approach based on geometric contours and distribution contours, this system aims to resolve the problem of coordinate misalignment during image fusion, which leads to inaccuracies in quantitative analysis of boron concentration at the human body contours and air boundaries. Additionally, another goal of the present invention is to apply the proposed approach through an automated analysis system, overcoming the drawbacks of traditional manual alignment by skilled biomedical or medical personnel during anatomical and functional image fusion. These drawbacks include human errors, lack of objective and unified standards, and extended pre-operative planning time. For comprehensive technical details, please refer to the following description.

An embodiment of the present invention provides a medical image analysis system comprising a contour module, an image fusion module, and a distribution analysis module. The contour module receives at least one anatomical image and at least one functional image. The contour module further comprises a contour recognition unit and a contour definition unit. The contour recognition unit recognizes a geometric contour in the anatomical image based on pixel values, and the contour definition unit defines the distribution contour based on the light signal intensity of boron drugs or other labeling substances. The image fusion module is coupled to the contour module. The image fusion module registers the anatomical image and the functional image. The image fusion module extracts at least one intersection region of the geometric contour and the distribution contour and outputs the intersection region. The distribution analysis module is coupled with the image fusion module. The distribution analysis module quantitatively determines the distribution of boron drugs or other labeling substances on the tissue surface through the intersecting region of geometric contours and distribution contours.

In addition, an embodiment of the present invention provides a medical image analysis method, which includes the following steps: preparing at least one functional image and at least one anatomical image, performing contour identification on the anatomical image to obtain a geometric contour; defining a contour on the functional image to obtain a distribution contour. Also, the method includes performing image fusion based on the geometric contour and the distribution contour, and taking the intersecting region; using the intersecting region for quantitative analysis of the concentration of boron drugs or other labeling substances.

### BRIEF DESCRIPTION OF THE DRAWINGS

The present invention can be more fully understood by reading the subsequent detailed description and examples with references made to the accompanying drawings. However, it should be understood that this is intended only as a reference for understanding the application of the present invention, and not as a limitation of the invention to a specific embodiment.
FIG. 1 illustrates the system architecture of the medical image analysis system;
FIG. 2 further shows the detailed architecture of the image fusion module;
FIG. 3A shows the procedure of the medical image analysis method;
FIG. 3B shows the detailed procedure during image fusion;
FIG. 4 further shows the method of obtaining the intersecting region when the geometric contour and distribution contour are registered;
FIG. 5 shows the actual imaging situation by using anatomical images (illustrated with CT images) and functional images (illustrated with PET images). Wherein the geometric contour of the anatomical image is much clearer than the functional image, but the functional image of distribution contour better reveals the characteristics of the labeled substance; and
FIG. 6 resolution compensation unit illustrates the specific compensation method of the image resolution via resolution compensation unit in one embodiment of the present invention.

### DETAILED DESCRIPTION OF THE INVENTION

This invention will be described in detail with better embodiments and perspectives to allow readers to fully understand the implementation methods of these embodiments. However, those skilled in the art should understand that the invention can also be practiced without these specific details. In addition, the present invention can also be applied and implemented through other specific embodiments. The details outlined in this specification can be applied based on different needs, and various modifications or changes can be made. Therefore, the invention will be described with better embodiments and perspectives. Such descriptions are intended to explain the structure of the invention and are for illustrative purposes only, not meant to limit the scope of the patent application. The terms used in the following description will be interpreted in the broadest reasonable manner. Those skilled in the art can adjust the structure of the invention according to the needs of manufacturing or therapeutic applications to meet the practical industrial demands, as outlined above. In addition, it should be noted that, for the convenience of illustration, boron drugs or other labeling substances are referred to as substances used to label specific tissues. Since the preferred embodiment of the present invention focuses on the application of BNCT, the term "boron drugs" will be used as a representative in the following text. However, after reading the specification of the present invention, those skilled in the art would understand that the system and method of the present invention can also be applied to substances other than boron drugs, such as fluorescent substances or isotopes, which will also be described herein.

The terms "about," "approximately," or "substantially" as used in the present invention generally refer to within twenty percent of a given value or range, preferably within ten percent, and more preferably within five percent. The values provided herein are approximate, meaning that, unless explicitly stated otherwise, the meaning of the terms "about," "approximately," or "substantially" can be inferred. Furthermore, the directional terms such as "before and after," "left and right," "up and down," etc., used in the present invention, can be understood in conjunction with the descriptions in the figures. Unless otherwise specified, the directional terms should be understood based on the context provided in the description of the invention. Finally, for the sake of simplifying the illustrations, some commonly known structures and components will be depicted in a simplified manner in the figures. Additionally, to facilitate viewing, the sizes of the components in the figures are not drawn to scale. Furthermore, in the description of the present invention, the method step numbers discussed are merely identifiers for steps in a particular method flow, unless specifically indicated otherwise in the description of the invention. These step numbers are used solely for clarity and convenience in explanation, and are not intended to describe the chronological order of the method steps, it is hereby stated in advance that the embodiments of the present invention are provided for illustrative purposes only and are not intended to limit the scope of the invention.

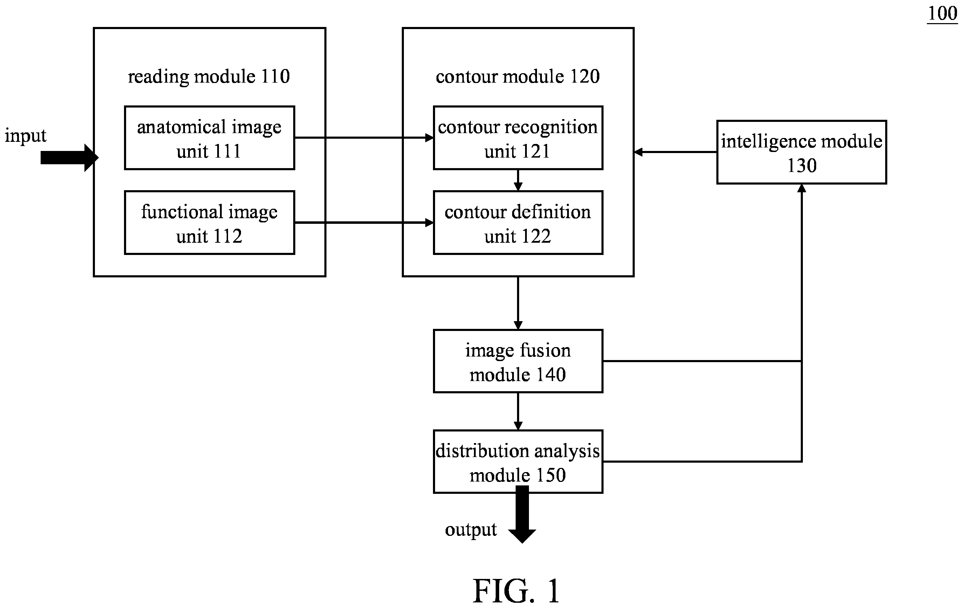

Please refer to FIG. 1. The present invention provides a medical image analysis system 100, which includes the following system components: a contour module 120, which receives at least one anatomical image and at least one functional image, the contour module 120 further includes a contour recognition unit 121 and a contour definition unit 122, wherein the contour recognition unit 121 identifies the geometric contours in the anatomical image based on pixel values, in the other hand, the contour definition unit 122 defines the distribution contour based on the light signal intensity of boron drugs or other labeling substances (such as fluorescent substances or isotopes) in the functional image. An image fusion module 140 coupled to the contour module 120, wherein the image fusion module 140 registers the geometric contours in the anatomical image with the distribution contours in the functional image, then outputs the intersection region. A distribution analysis module 150 is coupled to the image fusion module 140 and quantifies the distribution of boron drugs or other labeling substances on the tissue surface by using the intersection region of the geometric contour and distribution contour. In one embodiment of the present invention, the contour definition unit 122 not only defining the distribution contour based on the boron drug in the functional image, but also defining the distribution contour on the functional image based on the geometric contour after registering the anatomical image and the functional image via the image fusion module 140. That is, the source of the distribution contour can be defined by (1) the light signal intensity of boron drugs or other labeling substances (such as fluorescent substances or isotopes), or (2) in accordance with the anatomical contour after registering the anatomical images and functional images, or the combination of (1) and (2) allowing the medical personnel select the operation scenario based on the specific application needs. In one aspect of the present invention, the execution order of step (1) and (2) can be: performing step (1) first and then (2); performing step (2) first and then (1); or performing step (1) and (2) simultaneously. According one embodiment of the present invention, the boron drug may select from but not limited to p-Boronophenylalanine (BPA), Sodium Borocaptate (BSH), boronated amino acid drugs, or their combinations. On the other hand, the labeling substance may select from but not limited to 18F-BPA, FDG, fluorescent proteins (such as Green Fluorescent Protein, GFP), and other substances.

According to an embodiment of the present invention, the medical image analysis system 100 can be implemented in the form of software, hardware, or the combination of both. If the medical image analysis system 100 is software, when the workflow is installed on a computer system, the computer system becomes the tool used to execute the present invention. If the medical image analysis system 100 is hardware, then the system includes a typical processing chip, memory, cache memory, display device, network communication interface, operating system, and application programs, which are interconnected in a conventional manner to perform computation, caching, display, and data transmission. Each of the system components may also be a combination of hardware and software. Since the above is based on a commonly known architecture, it will not be further elaborated here.

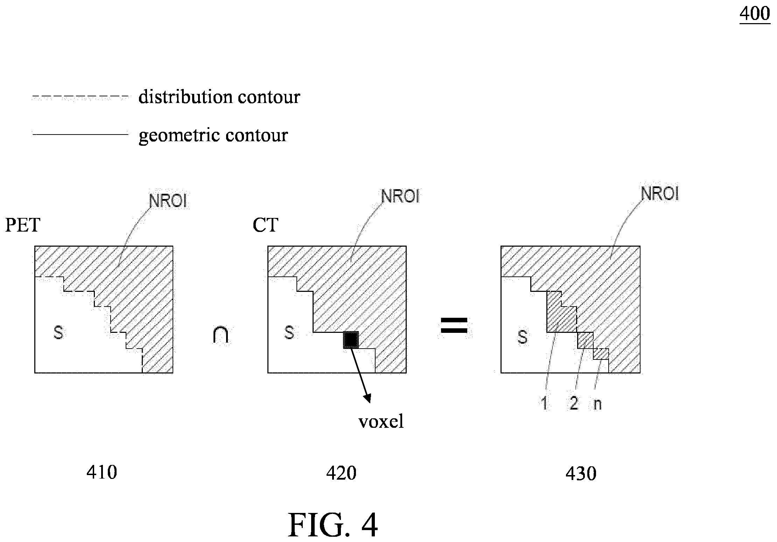

Please refer to FIG. 1 and FIG. 4. According to an embodiment of the present invention, the medical image analysis system 100 further includes a distribution analysis module 150, coupled to the image fusion module 140, therefore, the distribution of boron drugs or other labeling substances on the tissue surface is quantified based on the intersection region of the geometric contour and the distribution contour. According to one embodiment of the present invention, please refer to FIG. 4, where the implementation approach of the aforementioned intersection region can be specifically explained by the schematic diagram of the image processing process 400. Wherein in the process of the acquisition of distribution contour 410, the state at the boundary between the skin S (or any tissue surface of the human body) and the non-interest region (NROI) (such as air) in the functional image can be defined by the contour definition unit 122 via contour recognition techniques. The specific source of the functional image may include, but is not limited to, positron emission tomography (PET), gamma scintillation detectors, or single-photon emission computed tomography (SPECT). Additionally, in the process of the acquisition of geometric contour 420, said geometric contour 420 can be defined through the state at the boundary between the skin S and the non-interest region (NROI) (such as air) in the anatomical image by the contour recognition unit 121via the skin S or human tissue outward to at least one voxel in the non-interest region (NROI). The specific source of the anatomical image may include but is not limited to computed tomography (CT), magnetic resonance imaging (MRI), etc. Finally, the intersection region 430 is obtained to identify the intersection between the functional and anatomical images.

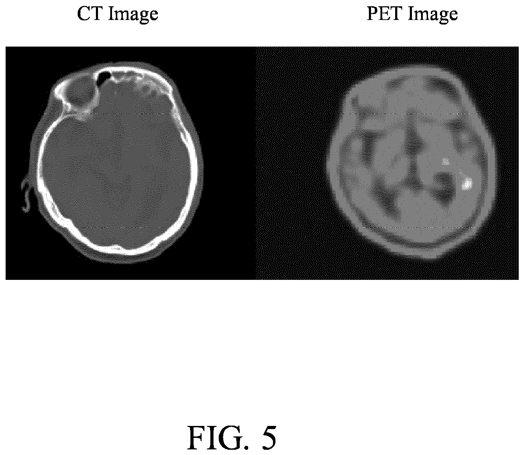

Please refer to FIG. 5. As mentioned above, according to one aspect of the present invention, taking positron emission tomography (PET) as an example used to label the lesions through the ingestion isotopes by the patient of functional imaging application scenario. Since the principle is to detect the positrons released during the beta-decay process of the isotopes, the detector detects the annihilation reaction, which occurs when the positron combines with a surrounding electron, releasing photon signals that indicate the location of the source (i.e., the lesion, such as a tumor). Accordingly, the isotope tracers accumulate in specific marked locations or areas with high blood flow and metabolic activity, PET images are mainly used for diagnosing pathological or physiological functional changes, but they provide limited information about the anatomical geometric structure of the human body. In addition, taking computed tomography (CT) as an example of an anatomical imaging application scenario. In generally speaking, the CT images are primarily obtained by using X-rays as the light source to irradiate the patient, relying on the attenuation differences of internal tissues to X-rays, finally, the signals measured at different irradiation angles are combined to generate the imaging, when the attenuation of the substances along the irradiation path exhibits ideal linear decay with no scattering or noise under perfect conditions, the tomographic image can be obtained through computational processing. However, these ideal conditions are difficult to achieve, in the most of circumstances, CT imaging has relatively poor resolution for soft tissues, and the high radiation dose used during the imaging process may increase the risk of harm to the patient, especially for lesions in soft tissues with lower thickness or in areas where boron drug absorption is low (such as normal tissues). Therefore, through the approach of obtaining the intersection region between the two, as described in the present invention, the accuracy of quantitative analysis of boron drug concentration at the boundary between the human body contour (such as skin S or human tissue) and air can be improved. In one embodiment of the present invention, the calculation of the intersection region can be performed as shown in FIG. 4, where the geometric contour extends from the skin S or human tissue outward to at least one voxel in the non-interest region (NROI), that is, the average, maximum, or minimum value of the volume of the n intersection regions (first intersection region 1, second intersection region 2, ... nth intersection region n), or a threshold set according to the needs of the application (e.g., weight values of the regions of interest). In other words, the intersection region can be processed as the average, maximum, or minimum volume of the n intersection regions protruding outward from the geometric contour, or as an appropriate threshold.

According to the content of the present invention, the medical image analysis system 100 further includes a reading module 110, coupled to the contour module 120 for reading and transmitting functional images and anatomical images. The reading module 110 further includes an anatomical image unit 111 and a functional image unit 112, performed the reading of the functional and anatomical images, respectively. According to an embodiment of the present invention, the reading module 110 can be, but is not limited to software, hardware, or a combination of both hardware and software. It can be installed or deployed remotely end (e.g., in the cloud) or locally end (on-site).

According to the content of the present invention, the image fusion module 140 further includes a coordinate processing unit 141. In an embodiment of the present invention, the image fusion module 140 is used to perform image fusion algorithms, which may include, but are not limited to, high-pass filtering, pyramid methods, wavelet transforms, curvelet transforms, principal component analysis, Hue, Saturation, and Intensity (HIS) color transformation fusion, or any combination of the above. When the image fusion module 140 fuses the functional image and anatomical image, since, as mentioned earlier, the scanning of the functional and anatomical images is performed separately, there exists high probability that the angles and positions are differ between the functional image and anatomical image. Therefore, in one embodiment of the present invention, the coordinate processing unit 141 is used to align the functional image(s) with the anatomical image(s), specifically, this includes angle rotation and coordinate translation processing of the functional and anatomical images. In one embodiment, the functional image can be aligned with the anatomical image through the aforementioned angle rotation and coordinate translation processing. In another embodiment, the anatomical image can be aligned with the functional image through angle rotation and coordinate translation processing. In yet another embodiment, both the functional and anatomical images can undergo angle rotation and coordinate translation processing simultaneously to synchronize them to the desired coordinate system, ensuring that the coordinate contours and geometric contours are more accurate during the image fusion process.

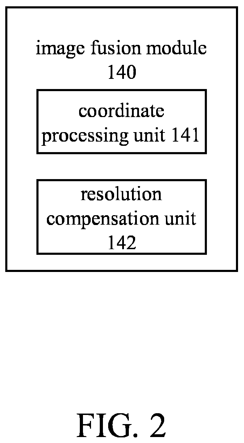

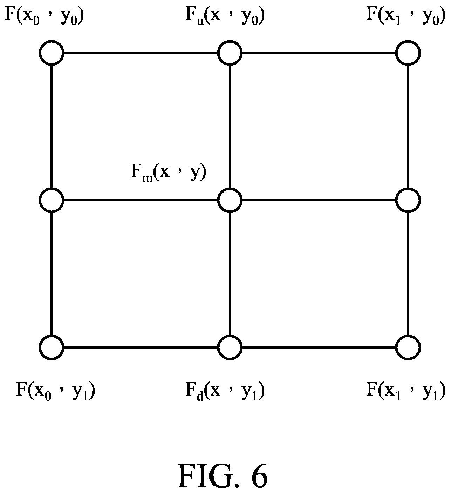

Please refer to FIG. 2. According to the content of the present invention, the image fusion module 140 further includes a resolution compensation unit 142, which is used to improve the resolution of the functional image and/or the anatomical image. According to one aspect of the present invention, in general, since the sources of the functional and anatomical images are different, and the functional and anatomical images was acquired at different points in time, resulting in the resolutions of the two images are usually different. Therefore, before the image fusion module 140 performs image fusion, the lower-resolution image must be compensated to a higher-resolution image in order to increase the accuracy of the image fusion process accordingly, the resolution compensation unit 142 compensate the functional image, anatomical image, or both, depending on the application requirements, wherein the compensate condition depends on whether the resolution of each image meets the fusion requirements. Please refer to FIG. 6, it illustrates one approach for the resolution compensation unit 142 to compensate the image resolution through interpolation in one embodiment of the present invention. Specifically, the interpolation may be performed using linear or non-linear techniques to estimate the value of any point between two known points. In the linear interpolation approach shown in FIG. 6, it is assumed that the four neighboring pixels around the coordinate point Fₘ (x, y) in the image are F(x₀, y₀), F(x₀, y₁), F(x₁, y₀), and F(x₁, y₁). When calculating the values of coordinate points Fᵤ(x, y₀), Fₘ(x, y), and F_{d}(x, y₁), the following two equations can be used to first calculate the values of Fᵤ(x, y₀) and Fₘ(x, y):
${F}_{u} \left(x{, y}_{0}\right) = F \left({x}_{0}{, y}_{0}\right) * \left({x}_{1}-x\right) + \left({x}_{1}{, y}_{0}\right) * \left(x-{x}_{0}\right)$
${F}_{d} \left(x{, y}_{1}\right) = F \left({x}_{0}{, y}_{1}\right) * \left({x}_{1}-x\right) + \left({x}_{1}{, y}_{1}\right) * \left(x-{x}_{0}\right)$

Finally, based on the results of the above two equations, the value of Fₘ(x, y) can be calculated as follows:
$F \left(x, y\right) = F \left(x{, y}_{0}\right) * \left({y}_{1}-y\right) + F \left(x{, y}_{1}\right) * \left(y-{y}_{0}\right)$

Thus, the resolution compensation unit 142 compensate and correct the functional image or/and the anatomical image to the required resolution via the approach mentioned above. It should be noted that those skilled in the art may select different resolution compensate approach or adjust various parameters used during the operation of correction or refinement, such as edge details, the amount of information to be preserved in the image, color differences, edge smoothness, and other considerations after reading this specification. It should be noted again that the resolution compensate approach illustrated in Figure. 6 is merely an example and should not be construed as limiting the scope of the present invention.

According to an embodiment of the present invention, the medical image analysis system 100 further includes an intelligence module 130, which is coupled to the contour module 120, the image fusion module 140, and the distribution analysis module 150. The intelligence module 130 monitors the results of the contour recognition unit 121 and the contour definition unit 122 in terms of the definition of geometric contours and recognized distribution contours, the image fusion of the functional and anatomical images, as well as the final accuracy and/or precision of the distribution analysis module 150 in quantitatively analyzing the boron drug at the human body contours, the air boundary, or specific regions of the body. When the intelligence module 130 determines that the accuracy of the boron drug meets the detection standards required by the training data, the intelligence module 130 controls the distribution analysis module 150 to output the boron drug detection results. However, when the intelligence module 130 determines that the accuracy of the boron drug does not meet the detection standards required by the training data, the intelligence module 130 controls the contour module 120, the image fusion module 140, and the distribution analysis module 150 to adjust their operation modes or related parameters based on the accuracy of the boron drug, until the detection results meet the preset detection standards.

As described above, in one embodiment of the present invention, the adjustment of the operation mode can be illustrated as follows. For the contour definition unit 122 in the contour module 120, the intelligence module 130 can adjust the source of the distribution contour based on the detection results, as mentioned earlier: (1) the light signal intensity of the boron drug or other labeling substances, or (2) using the anatomical contour as the basis for definition after the anatomical and functional images are registered (fusion), as it has been previously explained, it will not be reiterated here. In another embodiment of the present invention, the adjustment of the operation mode adjusts via the image fusion module 140, wherein the algorithm used in the image fusion process can be adjusted (switching from one algorithm to another for further trials), for example, the high-pass filter, pyramid method, wavelet transforms, curvelet transforms, principal component analysis, HIS transformation fusion as previously mentioned. Furthermore, the adjustment including the approach for coordinate transformation and resolution compensation in the coordinate processing unit 141 and resolution compensation unit 142 can be modified. In another embodiment of the present invention, the adjustment of the operation mode with respect to the distribution analysis module 150 involve adjusting the filtering parameters for the light signal strength, such as signal intensity, signal-to-noise ratio (SNR), full width at half maximum (FWHM), signal integration methods, and other related parameters. Furthermore, the algorithms required during the operation of the intelligence module 130 may include, but are not limited to, supervised learning networks, unsupervised learning networks, hybrid learning networks, associative learning networks, optimization application networks, and other algorithms, or any combination thereof.

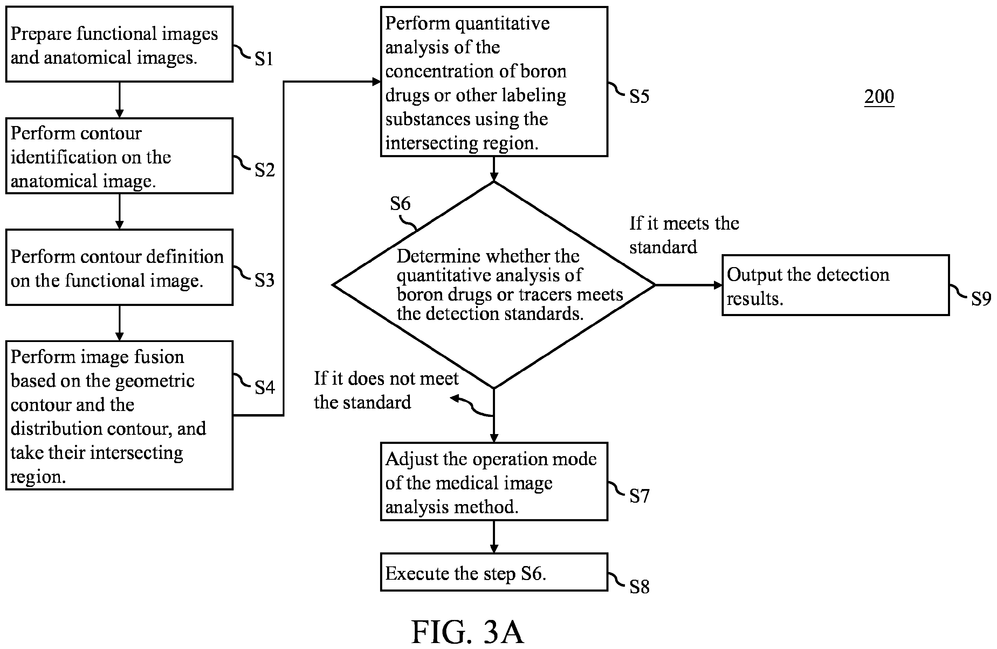

Please refer to FIG. 3A. The present invention also proposes a medical image analysis method 200, which includes the following procedures: In step S1, at least one functional image and at least one anatomical image are prepared, making the contour module 120 receive the aforementioned functional image and anatomical image. In step S2, the anatomical image undergoes contour recognition by the contour recognition unit 121 to obtain a geometric contour. In step S3, the functional image undergoes contour definition by the contour definition unit 122 to obtain a distribution contour. In step S4, the image fusion module 140 performs image fusion based on the geometric contour and the distribution contour, and takes their intersecting region. The image fusion algorithm can be, but is not limited to, high-pass filtering, pyramid method, wavelet transforms, curvelet transforms, principal component analysis, HIS transformation fusion, or any combination of the above. In step S5, the distribution analysis module 150 performs quantitative analysis of the boron drugs concentration or other labeling substances in accordance with the intersecting region. According to one embodiment of the present invention, in addition to defining the distribution contour of the boron drug through the functional image, the contour definition unit 122 may also defining the distribution contour on the functional image based on the geometric contour after fusing the anatomical and functional images via the image fusion module 140 by executing the step S4. Namely, the source of the distribution contour can be defined by (1) the light signal intensity of the boron drug or other labeling substances (such as fluorescent substances or isotopes), or (2) taking the anatomical contour as a basis for definition after the registration (fusion) of the anatomical and functional image is made. The execution methods for (1) and (2) are the same as those described in the previous section, it will not be reiterated here.

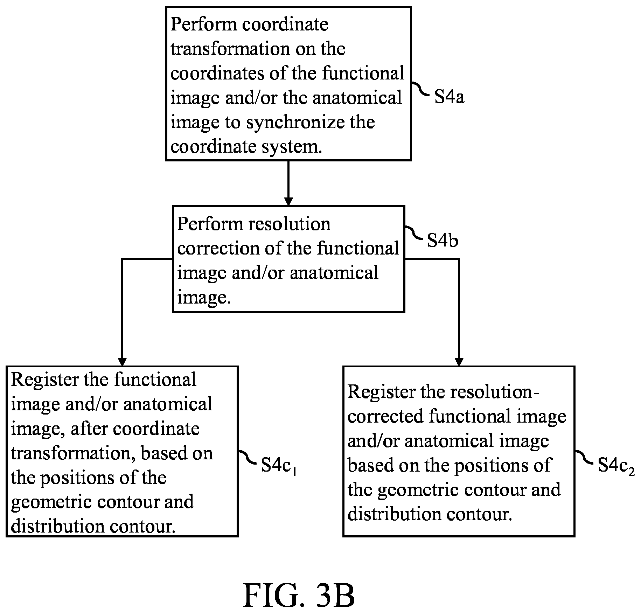

Please continue referring to FIG. 3B. According to one embodiment of the present invention, the medical image analysis method 200 in step S4 further includes the following substeps: In step S4a, the coordinate processing unit 141 performs coordinate transformation on the coordinates of the functional image or/and anatomical image to synchronize the coordinate systems of the functional and anatomical images, enabling alignment between the functional and anatomical images. Specifically, the coordinate transformation includes angle rotation processing and coordinate translation processing for both the functional and anatomical images. In one embodiment, the functional image may be aligned with the anatomical image through the aforementioned angle rotation processing and coordinate translation processing. In another embodiment, the anatomical image can also be aligned with the functional image through angle rotation processing and coordinate translation processing. In the other embodiment, both the functional and anatomical images can undergo angle rotation processing and coordinate translation processing simultaneously to the required coordinate system, ensuring that the coordinate contours and geometric contours are more accurate during the image fusion process. Furthermore, the medical image analysis method 200 in step S4 further includes the following substeps: In step S4ci, the image fusion module 140 registers the functional image and/or anatomical image based on the positions of the geometric contour and distribution contour after coordinate transformation.

Please refer to FIG. 3B for further illustration, according to an embodiment of the present invention, the medical image analysis method 200 in step S4 further includes the following substeps: In step S4b, the resolution compensation unit 142 performs resolution compensation(correction) on the functional image or anatomical image. In step S4b, the resolution compensation referring to make the compensation of low-resolution images to high-resolution images, the specific appreach can be carried out by performing linear interpolation or nonlinear interpolation. Additionally, in step S4c₂, the resolution-corrected functional image and/or anatomical image are registered based on the positions of the geometric contour and distribution contour.

Please refer to FIG. 3A. According to an embodiment of the present invention, the medical image analysis method 200 further includes the following steps: In step S6, the intelligence module 130 determines whether the quantitative analysis of boron drugs or tracers on the surface of the body or tissue meets the detection standards required for the precision of BNCT (Boron Neutron Capture Therapy) by the distribution analysis module 150. If it meets the standard, step S9 is executed, and the detection results of the boron drug are output by the distribution analysis module 150. If it does not meet the standard, step S7 is executed, where the intelligence module 130 adjusts the operation mode of the contour module 120, the image fusion module 140, and the distribution analysis module 150 in the medical image analysis method 200. In step S8, step S6 is executed again, until the output detection result meets the precision detection standards required for BNCT. In an embodiment of the present invention, the algorithms required for the operation of the intelligence module 130 include, but are not limited to, supervised learning networks, unsupervised learning networks, hybrid learning networks, associative learning networks, optimization learning networks, and other algorithms, or any combination of the above.

In summary, the medical image analysis system and method proposed in the present invention address the limitations of conventional techniques, in which both functional and anatomical image data are composed of discontinuous image sets, this often results in certain regions being unaligned or exhibiting phase discrepancies after image fusion, thereby reducing the accuracy and precision of boron concentration calculations. To overcome the shortcoming of aforementioned issue, the geometric contours and distribution contours are defined by anatomical images and functional images respectively, the geometric contours and distribution contours is used for correcting these errors, aiming to achieve a more accurate representation of the actual boron concentration in the present invention. As such, the present invention not only has significant industrial applicability but also features a novel structure and advanced performance, for which this application is made. Also, it should be noted that those skilled in the art may make various modifications without departing from the scope of protection as defined by the appended claims after reading the present invention.

## Claims

1. A medical image analysis system (100), **characterized in that** the system comprising:
a contour module (120), receiving an anatomical image and a functional image, the contour module (120) further comprising:
a contour recognition unit (121), recognizing a geometric contour (420) from said anatomical image; and
a contour definition unit (122), recognizing a distribution contour (410) from said functional image;
an image fusion module (140), coupled to the contour module (120), registering said anatomical image and said functional image, extracting at least one intersection region (430) of the geometric contour (420) and the distribution contour (410), and outputting the at least one intersection region (430); and
a distribution analysis module (150), performing quantitative analysis on the at least one intersection region (430).

2. The medical image analysis system (100) according to claim 1, wherein the contour definition unit (122) defines the distribution contour (410) by registering said anatomical image and said functional image, based on the anatomical contour.

3. The medical image analysis system (100) according to claim 1, wherein the contour definition unit (122) defines the distribution contour (410) based on a light signal intensity of boron drugs or other labeling substances.

4. The medical image analysis system (100) according to claim 1, wherein the contour recognition unit (121) defines the geometric contour (420) by protruding at least one voxel outward from the skin or human tissue towards the non-interest region.

5. The medical image analysis system (100) according to claim 1, wherein an algorithm for image fusion performed by the image fusion module (140) is selected from a high-pass filtering, a pyramid method, a wavelet transform, a curvelet transform, a principal component analysis, or a HIS transformation fusion.

6. The medical image analysis system (100) according to claim 1, wherein the image fusion module (140) further includes a coordinate processing unit (141) that performs angle rotation processing or coordinate translation processing to align said functional image with said anatomical image.

7. The medical image analysis system (100) according to claim 1, wherein the image fusion module (140) further includes a resolution compensation unit (142) that improves resolutions of said functional image and/or said anatomical image, wherein the resolution compensation unit (142) improves the image resolution using linear interpolation or non-linear interpolation.

8. The medical image analysis system (100) according to claim 1, further comprising:
a reading module (110), coupled to the contour module (120), for transmitting said functional image and said anatomical image to the contour module (120), wherein the reading module (110) further comprises:
an anatomical image unit (111) configured to read said anatomical image; and
a functional image unit (112) configured to read said functional image.

9. The medical image analysis system (100) according to claim 1, further comprising an intelligence module (130) configured to monitor and adjust operation modes of the contour module (120), the image fusion module (140), and the distribution analysis module (150) via an artificial intelligence, wherein an algorithm of the artificial intelligence is selected from supervised learning networks, unsupervised learning networks, hybrid learning networks, associative learning networks, or optimization learning networks.

10. A medical image analysis method, **characterized in that** the method comprising:
preparing a functional image and an anatomical image;
identifying said anatomical image by a contour module (120) to obtain a geometric contour (420);
defining said functional image by the contour module (120) to obtain a distribution contour (410);
performing image fusion of said anatomical image and said functional image by an image fusion module (140), and taking at least one intersection area of the geometric contour (420) and the distribution contour (410); and
performing a quantitative analysis based on the at least one intersection area by a distribution analysis module (150).

11. The medical image analysis method according to claim 10, wherein the contour module (120) further defines the distribution contour (410) by using the anatomical contour from the registered anatomical image and said functional image.

12. The medical image analysis method according to claim 10, wherein the contour module (120) further defines the distribution contour (410) by using a light signal intensity of boron drugs or other labeling substances.

13. The medical image analysis method according to claim 10, further comprising the coordinate transformation on coordinates of said functional image and/or said anatomical image by a coordinate processing unit (141), through angle rotation processing or coordinate translation processing to synchronize the coordinate system.

14. The medical image analysis method according to claim 10, further comprising the resolution compensation of said functional image and/or said anatomical image via a resolution compensation unit (142).

15. The medical image analysis method according to claim 10, further comprising the determination by an intelligence module (130) that whether accuracy of a detection result of the quantitative analysis performed by the distribution analysis module (150) meets a required detection standard, and outputting the detection result if the accuracy meets the required detection standard.
